# EUROPEAN PATENT APPLICATION

(11) **EP 4 456 013 A1**
(43) Date of publication of application: **30.10.2024**
(21) Application number: 23170869.4
(22) Date of filing: 28.04.2023
(51) Int. Cl.: G06V 20/50

(54) **METHOD TO OPERATE AN ADAPTIVE HEADLIGHT DEVICE OF A VEHICLE**

(71) Applicant: Valeo Internal Automotive Software Egypt, LLC, Giza, Cairo (EG)
(72) Inventor: Sobh, Ibrahim, Cairo (EG); Adel, Islam, Cairo (EG)
(74) Representative: Hofstetter, Schurack & Partner

(57) **Abstract**

The invention relates to a method to operate a headlight device object (2) of a vehicle (1) comprising: providing an outside information (10) describing an environment (3) of the vehicle (1) and providing a gaze information (14) describing a gaze of a driver (9) of the vehicle (1). The method comprises determining (S3) a control command (19) for the headlight device (2) by applying a control command determining algorithm (22) on the provided outside information (10) and the provided gaze information (14), so that the determined control command (19) describes at least one setting (20, 21) for the headlight device (2) by which light emitted by the headlight device (2) is adjusted to the environment (3) and the gaze of the driver (9). It also comprises operating (S8) the headlight device (2) according to the determined control command (19).

## Description

The invention relates to a method to operate an adaptive headlight device for a vehicle. Besides, the invention relates to a vehicle, a control device, a headlight system for a vehicle and a computer program product to perform such a method.

A vehicle may comprise a headlight device comprising at least one headlamp or headlight. The headlight device is configured to illuminate an environment of the vehicle, in particular the environment located in front of the vehicle in a forward direction of the vehicle. The headlight device may be adaptive so that, for example, a focus area and/or an intensity of light emitted by the headlight device is modifiable, in particular locally variable.

The adaptive headlight device may be operated under consideration of the environment. If there is, for example, an object of interest in the environment, the intensity of the emitted light may be increased.

US 2022/0286594 A1 discloses a system with an illumination source, a camera to detect illumination from the illumination source, and a computer communicatively coupled to the illumination source and the camera. The computer is programmed to detect an object in image data from the camera, identify landmarks of the object in the image data, determine a distance from the camera to the object, and adjust a brightness of the illumination source based on the distance.

WO 2004/034183 A2 discloses an image acquisition and processing method for automatic vehicular exterior lighting control. With the automatic vehicular exterior lighting control at least one exterior light control signal is generated as a function of a classification network.

To provide an adaptive headlight device that is particularly useful for a driver of the vehicle, the driver should be considered when determining a control command for the headlight device.

It is the object of the invention to provide control commands for an adaptive headlight device of a vehicle, which are useful for a driver.

The independent claims solve the object.

A first aspect of the invention relates to a method to operate an adaptive headlight device of a vehicle. The adaptive headlight device comprises at least one headlight or headlamp of the vehicle. The headlight device is configured to emit light in direction of an environment of the vehicle, in particular the environment located in front of the vehicle in a forward direction of the vehicle.

The invention considers that traditionally the headlight device of a vehicle is passive and independent of a surrounding scenario in terms of road, other vehicles, pedestrians, traffic signs and/or other objects or obstacles in the environment. Furthermore, it does not consider a driver's gaze and hence a direction in which the driver is looking. However, if the surrounding scenario and hence the environment of the vehicle as well as the driver's gaze are considered, it is possible to adjust an illumination provided by the headlight device so that areas of relevance are particularly illuminated. This may be useful for the driver of the vehicle and may contribute to reduce disadvantages of not ideally illuminated and/or blind areas in the environment.

The method comprises providing an outside information. The outside information describes the environment of the vehicle. Preferably, it describes the environment of the vehicle located in front of the vehicle in forward direction of the vehicle. The environment may be a part of a 360-degreed environment of the vehicle. It may alternatively be referred to as a part or as a subpart of a total environment of the vehicle. The outside information may comprise at least one image of the environment. Preferably, the outside information is or comprises camera data.

Besides, the method comprises providing a gaze information describing a gaze of a driver of the vehicle. The gaze of the driver is, for example, a look or sight of the driver. The gaze information may provide information on a direction in which the drivers is looking. Based on the gaze information, a part of the environment is determinable that the driver is observing and/or focusing on. The gaze information may comprise, for example an image of the driver that show at least one eye of the driver. Preferably, the gaze information is or comprises camera data.

The method comprises determining a control command for the adaptive headlight device by applying a control command determining algorithm to the provided outside information and the provided gaze information. The control command determining algorithm comprises, for example, at least one rule. If the at least one rule is applied to the outside information and the gaze information, the control command is calculated and hence determined. The determined control command describes at least one setting for the headlight device. By this setting, light emitted by the headlight device is adjusted to the environment and the gaze of the driver. By taking into account the current environment of the vehicle as well as the look of the driver, it is hence achieved to optimize a command for the headlight device. For example, it is determined, that a specific area of the environment should be in the focus of the light emitted by the headlight device. Therefore, for example, the determined control command may comprise a command to change a current focus area of the headlight device to a new focus area that is or at least comprises the determined specific area. The specific area may be a possible obstacle described by the outside information and/or an area at which the driver is looking as indicated by the gaze information.

The method comprises operating the headlight device according to the determined control command. Thus, the headlight device is controlled according to the determined control command. In the above-mentioned example, the headlight device, for example, illuminates the determined specific area by focusing light on it and/or by locally increasing the intensity of the light emitted towards the specific area. By doing so, intuitive control of the headlight device that is reasonable for the driver and hence useful for the driver is provided. This also contributes to reduce threads of not ideal or bad lightning. Compared to a headlight device that does not consider the environment as well as the gaze of the driver, the described method improves the operation of the headlight device.

A control device of the vehicle may perform the described method. The control device may be a part of the headlight device. The control device is, for example, a computer and/or a control unit, especially an electronic control unit of the vehicle. In addition, the following embodiments are performed with the control device, if possible.

According to an embodiment, the determined control command describes a first setting by which a focus area of the light is adjusted. Alternatively or additionally, the determined control command describes a second setting by which an intensity of the light is adjusted. This means that the determined control command comprises instructions for the headlight device so that the headlight device sets and/or changes the area lighted by the headlight device and/or a brightness of the emitted light. Preferably, the determined control command describes settings, which are different from current and/or previous settings of the headlight device. The second setting may describe an intensity that varies locally. The intensity may be higher or lower than a current and/or previous intensity of the light. The focus area may be describes by a direction and an opening angle of a light beam emitted by the headlight device. The method hence allows focus control and headlight intensity control because of considering the environment and the driver's gaze.

Another embodiment comprises that the control command determining algorithm comprises an artificial neural network. The artificial neural network is in particular a convolutional neural network (CNN). The used algorithm is hence based on a deep learning model. The CNN is particularly suitable for analyzing visual data, such as images. Known CNN may be used. Therefore, the outside information as well as the gaze information is provided for and thus fed into the artificial neural network, in particular the CNN. Here, the artificial neural network may be configured to solve two tasks. One of them may be to determine the first setting and the other one may be to determine the second setting. This means that the artificial neural network is configured to determine the control command for the headlight device.

The artificial neural network has been trained in advance by a neural network training procedure. Therefore, a standard supervised training way may be used. Preferably, an end-to-end training is performed, meaning that the artificial neural network is preferably trained by raw data alone, such as raw image data. The raw image data comprises, for example, images of typical environments of a vehicle and images of eyes of drivers who in particular look in different directions. After or during the training procedure, the artificial neural network may create outputs which may be mapped to inputs and hence to the raw data. Besides, the trained artificial neural network is tested or evaluated. For the testing, test data may be provided to the artificial neural network. The test data may be different from the raw data used for training and hence from used training data. The test data may be referred to as evaluation data. Only if the evaluation of the artificial neural network is successful its generalization may be ensured. Then, the artificial neural network may be used as the control command determining algorithm. The artificial neural network is hence trained for determining the control command.

A further embodiment comprises that the control command determining algorithm comprises two separate input branches for feature extraction. The provided outside information is provided to a first input branch of the two input branches. The provided gaze information is provided to a second input branch of the two input branches. The control command determining algorithm, in particular the artificial neural network may therefore be based on a multi branch deep learning model. Preferably, a multi-branch CNN is used. The control command determining algorithm is hence designed to process two different kinds of input data, which are the outside information and the gaze information. This is a reasonable approach to determine the control command that is based on different input data, which is here the outside information and the gaze information.

Besides, an embodiment comprises that the control command determining algorithm comprises a fusion layer that fuses the features extracted by the two input branches and outputs the control command. This means that the artificial neural network comprises the two branches as well as the fusion layer to solve preferably two tasks, which are the first setting and the second setting. Therefore, the described structure of the artificial neural network, in particular of the CNN, is used to determine the output command. Thus, the method is easily applicable because well-working artificial neural network approaches may be used.

A further embodiment comprises that applying the control command determining algorithm comprises determining at least one area of interest in the environment of the vehicle and a driver's area of interest in the environment of the vehicle at which the driver gazes or looks. During the application of the control command determining algorithm, meaning when running the control command determining algorithm, it is possible that the algorithm determines all parts of the environment which are considered to be of particular interest. Such an area of interest may be, for example, an area with a traffic sign, in particular with a warning sign. The driver's area of interest may be the area on the environment the driver is looking at. It is hence the area directly in sight of the driver. Preferably, the first input branch contributes to determining the area of interest and the second input branch contributes to determining the driver's area of interest. The determined areas of interest are important for determining the control command because this control command depends on the area of interest as well as the driver's area of interest. This is because the control command preferably describes settings to illuminate and/or to change the illumination of these areas.

Moreover, an embodiment comprises that the area of interest and/or the driver's area of interest may comprise at least partially an opposing vehicle, a traffic sign, an obstacle and/or a road infrastructure element. For example, the detection of the opposing vehicle may cause a local reduction of the intensity of the emitted light and/or a change of the focus area away from the opposing vehicle to avoid blinding the driver of the opposing vehicle. Therefore, the control command determining algorithm is trained to detect and consider opposing vehicles. The traffic sign, the obstacle and/or the road infrastructure element may be important for the driver of the vehicle. They may influence his or her next driving maneuver. Therefore, their areas in the environment should be focus areas and/or illuminated with a higher intensity than surrounding areas of the environment. The obstacle is, for example, an object that may block a driving path of a vehicle on a road on which the vehicle is driving. The obstacle may be, for example, a parked vehicle, a building, a wall, a fallen tree, a pedestrian and/or an animal. The road infrastructure element may be, for example, a crossing, a traffic light, a roundabout, an entrance to a parking space and/or a junction. Any one of the listed obstacles and/or road infrastructure element may be, for example, in case of bad lightning conditions, important to be placed into the focus area of the headlight and/or to be illuminated with particularly high intensity. Therefore, the control command determining algorithm is specified to detect at least one of the listed objects and consider it when determining the control command. This further increases the usefulness of the determined control command.

In an example, the vehicle is driving on a road and approaches a crossing. There is a traffic sign to indicate that this crossing is nearby. However, the driver has not yet focused the traffic sign according to the provided gaze information. However, it may be important for the driver to have a better look at the traffic sign. Therefore, the headlight device may adapt its focus area to cover the traffic sign and/or adapt the intensity of light that is emitted towards the traffic sign. It is hence possible to guide the driver's gaze to the specific area, which is here the area of interest for the driver. However, in another example an opposing vehicle is detected. Consequently, the intensity of light emitted by the headlight device in direction of the opposing vehicle may be reduced to avoid blinding the driver of the opposing vehicle. Besides, the focus area may be changes so that it leaves out the opposing vehicle. However, in another example, there is a dark area in the environment of the vehicle that is badly illuminated by the headlight device and/or an external light source. Then, the control command may comprise a setting to increase the intensity and/or to focus the dark area with the headlight device. It is hence possible to perform versatile and specific adjustments of the headlight device based on the outside information as well as the gaze information.

According to another embodiment, the provided outside information and/ or the provided gaze information describe a single frame captured by a camera of the vehicle. The respective information is, in particular, a picture and hence an image taken by a vehicle camera. The frame is, for example, the last captured image of the camera. It is hence a current frame. Based on this one image of the environment and/or this one image of the driver's gaze, the control command is determined. The method is hence intended for life-adjustment of the headlight device according to the determined control command. The method is hence preferably repeated continuously, for example, in predetermined time intervals. However, previously determined control commands may be considered, meaning that control commands from the previous second and/or seconds may influence the determination of the current control command.

Another embodiment comprises that the provided outside information and/or the provided gaze information describe multiple frames captured by the camera within a last second. In particular, the respective information comprises a predetermined number of frames. For example, if the camera captures up to 30 frames per second, the method may comprise choosing 10 or 15 of these frames, for example every third or every second captured frame of the frames captured within the last second. For example, all these frames are provided to or fed into the respective branch of the artificial neural network. As a result, a more accurate and/or detailed result of the control command determining algorithm is provided.

A further embodiment comprises that a front camera of the vehicle is the camera that captures the outside information. The provided outside information is hence at least one frame or multiple frames captured by the front camera of the vehicle. The front camera may be positioned centrally at an upper end of a windshield of the vehicle when viewed in height direction of the vehicle. The front camera may comprise means for analysis, such as a control unit to process the captured frames or images. However, the front camera may transmit the captured outside information to the control device that performs the method. Therefore, the front camera is here configured to provide raw data to the control device of the vehicle. Alternatively or additionally, the front camera may be positioned at a front end of the vehicle, for example in a front bumper. Alternatively or additionally, the front camera may be a surrounding view camera of the vehicle. The front camera provides hence useful data describing at least the environment that the headlight device may directly influence.

Another embodiment comprises that an interior camera of the vehicle is the camera that captures the gaze information. The vehicle camera is typically located next to or on a holding element of an inside mirror of the vehicle. Alternatively or additionally, it may be located at a vehicle ceiling. The interior camera may at least capture a face, in particular at least an eye of the driver of the vehicle. This means that the gaze information may just shows a part of the driver of the vehicle. The interior camera may transmit its data as the gaze information to the control device. The interior camera provides hence useful data to estimate the gaze and/or looking direction of the driver.

All information considered here are camera information and hence pictures and/or images taken by cameras. This means that by choosing a sequence of frames or a single frame from the front camera and/or the interior camera and inputting the respective frame or frames into the control command determining algorithm allows predictions for the ideal or optimum focus area and/or intensity of light of the headlight device.

The above-described artificial neural network can be understood as a software code or a compilation of several software code components, wherein the software code may comprise several software modules for different functions, for example one or more encoder modules and one or more decoder modules.

The artificial neural network can be understood as a non-linear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the control device.

The artificial neural network comprises several modules including an encoder module and at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the artificial neural network.

Another aspect of the invention relates to a vehicle. The vehicle is configured to perform the above-described method. The vehicle is preferably a motor vehicle, such as a passenger car, a truck, a bus, a motor cycle and/or a moped.

Another aspect of the invention relates to a control device of a vehicle. The control device is configured to perform the steps of the above-described method that are not performed explicitly by the camera. Preferably, the control device receives the outside information and the gaze information. Therefore, it provides the outside information and the gaze information for further processing, determines the control command and operates the headlight device accordingly. It is possible that the control device provides commands for the front camera and/or the interior camera to capture the outside information or the gaze information, respectively.

The control device is a computing unit. The control device may in particular be understood as a data processing device, which comprises processing circuitry. The control device can therefore in particular process data to perform computing operations. This may also include operations to perform indexed accesses to a data structure, for example a look-up table, LUT.

In particular, the control device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The control device may also include one or more processors, for example one or more microprocessors, one or more central processing units, CPU, one or more graphics processing units, GPU, and/or one or more signal processors, in particular one or more digital signal processors, DSP. The control device may also include a physical or a virtual cluster of computers or other of said units.

In various embodiments, the control device includes one or more hardware and/or software interfaces and/or one or more memory units. The memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Another aspect of the invention relates to a headlight system for a vehicle. The headlight system comprises a headlight device, such as headlights or headlamps of a vehicle, a front camera, an interior camera, and a control device as described above. The headlight system is configured to perform the above-described method. It performs the method.

A further aspect of the invention relates to a computer program product. The computer program product is a computer program. The computer program product comprises instructions which, when the program is executed by a computer, such as the control device of the vehicle, cause the computer to perform the steps of the method for the control device.

Further features of the invention are apparent from the claims, the figures and the description of figures. The invention includes combinations of the described embodiments. The embodiments described in context with the method according to the invention, individually as well as in combination with each other, apply accordingly, as far as applicable, to the inventive vehicle, the inventive control device, the inventive headlight system and the inventive computer program product.

The figures show in:
- Fig. 1: a schematic representation of a vehicle with an adaptive headlight system; and
- Fig. 2: a schematic representation of a method to operate an adaptive headlight device of a vehicle.

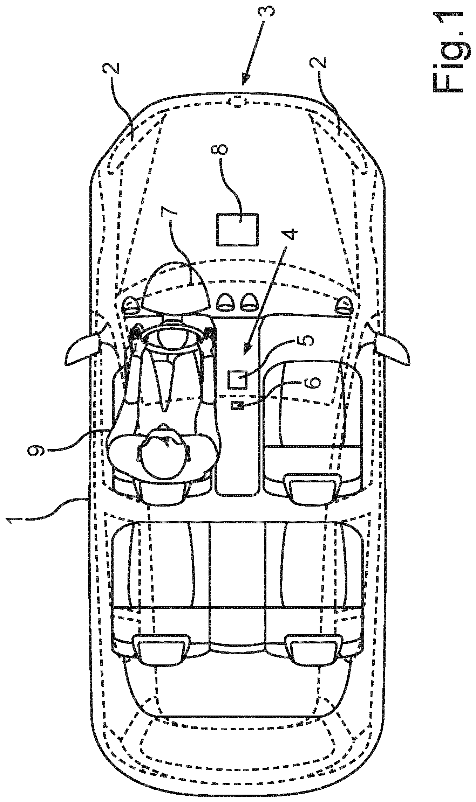

Fig. 1 shows a vehicle 1 comprising an adaptive headlight device 2. The headlight device 2 comprises here two headlights or headlamps in a front area of the vehicle 1. With the means of the headlight device 2, an environment 3 of the vehicle 1 may be illuminated. The environment 3 is here located in front of the vehicle 1 in a forward direction of the vehicle 1 and hence adjacent to the front area of the vehicle 1.

The vehicle 1 comprises here two cameras 4, a front camera 5 and an interior camera 6. The front camera 5 is here located at an upper central position of a windshield 7 of the vehicle 1 when viewed in a height direction of the vehicle 1. The interior camera 6 is located in an interior of the vehicle and may capture an image of at least a part of the interior of the vehicle 1.

The vehicle 1 comprises a control device 8 that may be alternatively referred to as a computing device or as a control unit.

Besides, there is a driver 9 sitting in the vehicle 1 who is driving the vehicle 1. This driver 9 is at least partially within a coverage area of the interior camera 6.

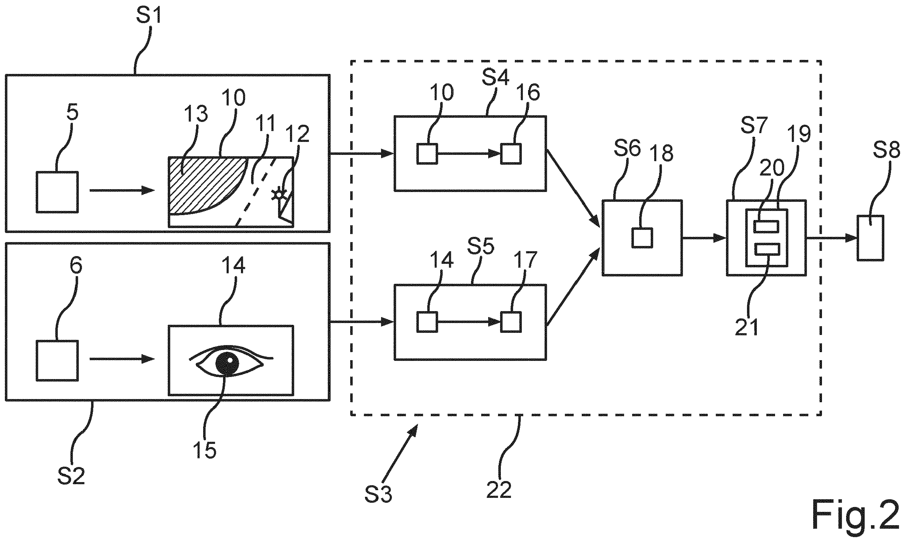

Fig. 2 shows steps of a method to operate the adaptive headlight device 2 of the vehicle 1. In general, a headlight system that comprises the headlight device 2, the control device 8, the front camera 5 and the interior camera 6 may perform the method.

In a step S1, the front camera 5 may capture an outside information 10. The outside information 10 describes the environment 3 of the vehicle 1. Here, as an example, the outside information 10 describes a road 11 on which the vehicle 1 is driving. The road 11 has an artificial light source 12, which is here a streetlamp. However, further away from the light source 12, there is a dark area 13 that is currently not well illuminated by the headlight device 2 and the light source 12.

In a step S2, the interior camera 6 may capture a gaze information 14. The gaze information 14 describes a gaze of the driver 9 of the vehicle 1. Therefore, the respective camera data shows at least one eye 15 of the driver 9. Based on the gaze information 14, a looking direction of the driver 9 may be determinable.

The method assumes that the captured outside information 10 and the captured gaze information 14 may be transmitted to the control device 8. The control device 8 performs the further steps of the method.

In general, the provided outside information 10 and/or the provided gaze information 14 may describe a single frame captured by the respective camera 4 and/or multiple frames captured by the respective camera 4 within a last second. Preferably, the multiple frames are limited to a predetermined number of frames.

The method comprises determining a control command 19 for the headlight device 2 so that the determined control command 19 describes at least one setting for the headlight device 2 by which light emitted by the headlight device 2 is adjusted to the environment 3 and the gaze of the driver 9. Therefore, the method comprises applying a control command determining algorithm 22 on the provided outside information 10 and the provided gaze information 14. All this is performed in a step S3, which may comprise multiple sub-steps S4 to S7. These sub-steps S4 to S7 may specify the control command determining algorithm 22.

The control command determining algorithm 22 may comprise an artificial neural network which is, in particular, a convolutional neural network. Preferably, it is a multi-branch convolutional neural network. Therefore, the algorithm 22 may comprise two separate input branches 16, 17, which are here referred to as a first input branch 16 and a second input branch 17. In a step S4, the provided outside information 10 is provided to the first input branch 16 and hence fed into the first input branch 16. In a step S5, the provide gaze information 14 is provided to and hence fed into the second input branch 17. Each input branch 16, 17 is configured for feature extraction from the input data, which is here the outside information 10 or the gaze information 14, respectively.

The used artificial neural network may comprise a fusion layer 18 that fuses the features extracted by the two input branches 16, 17 in a step S6. Furthermore, the fusion layer 18 may output a control command 19 in a step S7. A step S8 comprises operating the headlight device 2 according to the determined control command 19.

The control command 19 may describe a first setting 20 by which the focus area of the light is adjusted and/or a second setting 21 by which an intensity of the light is adjusted.

Applying the control command determining algorithm 22 may comprise determining at least one area of interest in the environment 3 of the vehicle 1 and a driver's area of interest in the environment 3 of the vehicle 1 at which the driver 9 is gazes. Within the area of interest and/or the driver's area of interest there may be at least partially an opposing vehicle 1, a traffic sign, an obstacle and/or a road infrastructure element. The opposing vehicle 1 may be considered to provide a control command 19 that does not blind the driver 9 of the opposing vehicle 1.

In case of the sketched outside information 10, the control command 19 should achieve to better illuminate the dark area 13. Besides, for example, the driver 9 is here looking on the road 11 ahead of him. Therefore, the dark area 13 should be a focus area of light emitted by the headlight device and an intensity of light emitted towards the road 11 should be increased for better sight of the driver 9. Here, for example, no opposing vehicle 1 or other vehicle 1 in front of the vehicle 1 is detected so that, for example, a high beam of the headlight device 2 may be activated. This may be described by the determine control command 19.

In summary, a deep learning visual perception for an adaptive headlight control using the front camera 5 and interior camera 6 has been described. Inputs are, for example, a sequence or frames from the front camera 5 (outside information 10) as well as a gaze image and hence an image captured by the interior camera 6 (gaze information 14). Output of the method are predictions to focus the light and/or an intensity of the light and hence the control command 19. The described artificial neural network architecture and hence the preferably used control command determining algorithm 22 consist of two input branches 16, 17 to extract features from each input followed by the fusion layer 18 to fuse both features together in a learnable way. Those comprise the output layer and hence the output that predicts the focus and/or intensity of light and is hence the control command 19 with the first and second setting 20, 21.

Benefits of the invention are that the adaptive headlights ensure a higher safety and intuitive control for the driver 9. It makes use of both front camera 5 and interior camera 6 together to enable accurate predictions and intuitive adaptive headlight control. The invention is feasible while being easy to train for accurate predictions of the tasks. It can also prevent Troxler's effect on the driver 9 of the opposing vehicle 1 while not compromising the road's illumination for the driver 9 on board and hence in the vehicle 1. This may be achieved by considered the opposing vehicle 1 as not part of the area of interest and/or the driver's area of interest.

## Claims

1. Method to operate an adaptive headlight device (2) of a vehicle (1) comprising:
- providing an outside information (10) describing an environment (3) of the vehicle (1);
- providing a gaze information (14) describing a gaze of a driver (9) of the vehicle (1);
- determining (S3) a control command (19) for the adaptive headlight device (2) by applying a control command determining algorithm (22) on the provided outside information (10) and the provided gaze information (14) so that the determined control command (19) describes at least one setting (20, 21) for the adaptive headlight device (2) by which light emitted by the adaptive headlight device (2) is adjusted to the environment (3) and the gaze of the driver (9); and
- operating (S8) the adaptive headlight device (2) according to the determined control command (19).

2. Method according to claim 1, wherein the determined control command (19) describes a first setting (20) by which a focus area of the light is adjusted and/or a second setting (21) by which an intensity of the light is adjusted.

3. Method according to claim 1 or 2, wherein the control command determining algorithm (22) comprises an artificial neural network, in particular a convolutional neural network.

4. Method according to claim 3, wherein the control command determining algorithm (22) comprises two separate input branches (16, 17) for feature extraction, wherein the provided outside information (10) is provided (S4) to a first input branch (16) of the two input branches (16, 17) and the provided gaze information (14) is provided (S5) to a second input branch (17) of the two input branches (16, 17).

5. Method according to claim 4, wherein the control command determining algorithm (22) comprises a fusion layer (18) that fuses (S6) the features extracted by the two input branches (16, 17) and outputs (S7) the control command (19).

6. Method according to any one of the preceding claims, wherein applying the control command determining algorithm (22) comprises determining at least one area of interest in the environment (3) of the vehicle (1) and a driver's area of interest in the environment (3) of the vehicle (1) at which the driver (9) gazes.

7. Method according to claim 6, wherein the area of interest and/or the driver's area of interest comprise at least partially an opposing vehicle (1), a traffic sign, an obstacle and/or a road infrastructure element.

8. Method according to any one of the preceding claims, wherein the provided outside information (10) and/or the provided gaze information (14) describe a single frame captured by a camera (4) of the vehicle (1).

9. Method according to any one of the preceding claims, wherein the provided outside information (10) and/or the provided gaze information (14) describe multiple frames captured by a camera (4) within a last second, in particular a predetermined number of frames.

10. Method according to claim 8 or 9, wherein a front camera (5) of the vehicle (1) is the camera (4) that captures the outside information (10).

11. Method according to any one of claims 8 to 10, wherein an interior camera (6) of the vehicle (1) is the camera (4) that captures the gaze information (14).

12. Vehicle (1) configured to perform a method according to any one of the preceding claims.

13. Control device (8) for a vehicle (1) configured to perform a method according to any one of the claims 1 to 9.

14. Headlight system for a vehicle (1) comprising an adaptive headlight device (2), a front camera (5), an interior camera (6) and a control device (8), wherein the headlight system is configured to perform a method according to any one of the claims 1 to 11.

15. Computer program product comprising instructions which, when the program is executed by a computer, cause the computer to carry out a method according to any one of the claims 1 to 9.
